(19) Europäisches Patentamt / European Patent Office / Office européen des brevets

(11) **EP 3 362 839 B1**

(12) **EUROPÄISCHE PATENTSCHRIFT**

(45) Veröffentlichungstag und Bekanntmachung des Hinweises auf die Patenterteilung:
**27.01.2021   Patentblatt 2021/04**

(21) Anmeldenummer: **15780854.4**

(22) Anmeldetag: **14.10.2015**

(51) Int Cl.:
*G02B 27/28* (2006.01)    *H05G 2/00* (2006.01)
*G02B 5/30* (2006.01)

(86) Internationale Anmeldenummer:
**PCT/EP2015/073767**

(87) Internationale Veröffentlichungsnummer:
**WO 2017/063686 (20.04.2017 Gazette 2017/16)**

(54) **POLARISATORANORDNUNG, EUV-STRAHLUNGSERZEUGUNGSVORRICHTUNG DAMIT UND VERFAHREN ZUR LINEAREN POLARISATION EINES LASERSTRAHLS**

POLARIZER ASSEMBLY, EUV RADIATION GENERATING DEVICE COMPRISING SAID POLARIZER ASSEMBLY, AND METHOD FOR LINEARLY POLARIZING A LASER BEAM

SYSTÈME DE POLARISATION, DISPOSITIF DE GÉNÉRATION DE RAYONNEMENT EUV ASSOCIÉ ET PROCÉDÉ DE POLARISATION LINÉAIRE D'UN FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.08.2018   Patentblatt 2018/34**

(73) Patentinhaber: **TRUMPF Lasersystems for Semiconductor Manufacturing GmbH**
**71254 Ditzingen (DE)**

(72) Erfinder:
- **KRAUSS, Günther**
  **71254 Ditzingen (DE)**
- **HARTUNG, Andrea**
  **70329 Stuttgart (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
EP-A1- 0 518 111        US-A1- 2008 002 751
US-A1- 2012 092 746     US-A1- 2015 062 544

**Beschreibung**

Die vorliegende Erfindung betrifft eine EUV-Strahlungserzeugungsvorrichtung mit mindestens einer Polarisatoranordnung.

Eine transmissive Polarisatoreinrichtung weist typischer Weise eine Polarisator-Fläche auf, die unter einem Winkel zum auftreffenden Strahl, beispielsweise einem Laserstrahl, ausgerichtet ist. Die Polarisator-Fläche kann beispielsweise an einer Seite eines Trägerelements aus einem für den Laserstrahl transmissiven Material, z.B. an einer Seite einer planparallelen Platte, gebildet sein. Der (beispielsweise unpolarisierte) Laserstrahl trifft in diesem Fall unter einem von 90° verschiedenen Winkel, typischer Weise unter dem so genannten Brewster-Winkel, auf die Polarisator-Fläche des transmittierenden Trägerelements auf. Ein von der Polarisator-Fläche ggf. reflektierter Strahlungsanteil ist in diesem Fall im Wesentlichen senkrecht zur Einfallsebene des Laserstrahls auf die Polarisator-Fläche polarisiert (s-Polarisation). Ein von der Polarisator-Fläche transmittierter Strahlungsanteil weist typischer Weise einen hohen Anteil einer zweiten Polarisationsrichtung auf, die parallel zur Einfallsebene des auftreffenden Laserstrahls verläuft (p-Polarisation).

An der Polarisator-Fläche kann eine polarisationsselektive Beschichtung gebildet sein, welche die Reflektivität der Polarisator-Fläche für den s-polarisierten Strahlungsanteil des Laserstrahls erhöht bzw. die Trennung der senkrecht zueinander polarisierten Strahlungsanteile verstärkt. Derartige Polarisatoreinrichtungen werden auch als Dünnfilm-Polarisatoren ("thin film polarizer", TFP) bezeichnet. Dünnfilm-Polarisatoren werden beispielsweise von der Fa. II-VI angeboten, vgl. "www.ii-vi.de/english/CO2-Laser-Optics/thin-film-polarizers.com". Alternativ oder zusätzlich zu einer polarisationsselektiven Beschichtung kann eine Polarisatoreinrichtung nicht nur eine, sondern mehrere planparallelen Platten aufweisen, deren Seitenflächen jeweils eine Polarisator-Fläche bilden, die parallel zueinander und unter dem Brewster-Winkel zum einfallenden Strahl ausgerichtet sind, um den vergleichsweise geringen s-polarisierten Strahlungsanteil des von einer jeweiligen Polarisator-Fläche bzw. einer jeweiligen planparallelen Platte transmittierten Laserstrahls weiter zu verringern.

Derartige Polarisatoren können auch bei Hochleistungs-Anwendungen eingesetzt werden, bei denen der Laserstrahl eine Leistung von mehreren hundert Watt aufweist, wie dies beispielsweise bei Laserbearbeitungsmaschinen zum Bearbeiten, z.B. zum Schneiden oder zum Schweißen, von Werkstücken oder bei EUV-Strahlungserzeugungsvorrichtungen der Fall ist, bei denen ein Hochleistungs-Laserstrahl auf ein Target-Material gerichtet wird, um dieses in einen Plasmazustand überzuführen und auf diese Weise EUV-Strahlung zu erzeugen.

Eine solche EUV-Strahlerzeugungsvorrichtung ist beispielsweise aus der US2012092746 A1 bekannt.

Aus der US 2008/0002751 A1 ist ein gütege-schaltetes $CO_2$-Lasersystem bekannt geworden, welches einen elektro-optischen Modulator als Phasenschiebe-Einrichtung zur Drehung der Polarisationsrichtung eines Laserstrahls (um 90°) aufweist. Der elektro-optische Modulator ist zwischen zwei Dünnschicht-Polarisatoren angeordnet, deren Einfallsebenen unter einem Winkel von 90° zueinander verdreht sind.

Hohe Laserleistungen haben zur Folge, dass in dem den (polarisierten) Laserstrahl transmittierenden Material eine temperaturabhängige Änderung des Brechungsindexes entsteht, die eine so genannte thermische Linse zur Folge hat. Da die Leistung des Laserstrahls und damit die Temperatur des transmittierenden Materials im Zentrum des Strahlprofils des Laserstrahls größer ist als im Randbereich des Laserstrahls, verändert sich die optische Dicke des Materials wie bei einer Linse vom Zentrum des Strahlprofils des Laserstrahls hin zu dessen Randbereich.

Es sind verschiedene Ansätze bekannt, um eine solche thermische Linse zu kompensieren: Beispielsweise ist es aus der DE 10 2011 054 941 B3 bekannt, eine Korrektur der thermischen Verschiebung der Fokuslage eines Laserstrahls eines leistungsstarken Lasers mit Hilfe einer Korrektureinheit vorzunehmen, die mindestens ein veränderbares optisches Element zum Verändern der Fokuslage anhand von Korrekturdaten aufweist.

Aus der JP 61238487 ist es bekannt, die thermische Linse an einem teildurchlässigen Spiegel eines Laserresonators zu überwachen, indem ein Laserstrahl unter einem Winkel zum Strahlengang der in dem Laserresonator erzeugten Laserstrahlung auf den teildurchlässigen Spiegel ausgerichtet und die durch die thermische Linse erzeugte Abweichung des Laserstrahls gemessen wird.

Aus der JP 11068213 ist ein $CO_2$-Laser mit einem Q-Switch bekannt geworden, bei dem der thermische Linseneffekt eines im Strahlengang angeordneten optischen Elements kompensiert werden soll, indem u.a. ein rotierender Chopper verwendet wird.

Aus der US 2015/0062544 A1 ist eine Vorrichtung zur Temperaturkompensation eines Fokussiersystems bekannt geworden, welches mindestens ein transmissives optisches Element mit einer thermischen Linse aufweist. Für die Temperaturkompensation wird mindestens ein reflektives optisches Element verwendet, das ebenfalls eine thermische Linse aufweist, die komplementär zu der thermischen Linse des transmissiven optischen Elements ist, so dass die kombinierten optischen Eigenschaften der beiden optischen Elemente im Wesentlichen temperaturunabhängig sind.

Es ist ebenfalls bekannt, für die Materialbearbeitung eine Umwandlung von linear polarisierter Laserstrahlung in zirkular oder elliptisch polarisierte Laserstrahlung vorzunehmen. Beispielsweise beschreibt die DE 100 33 071 A1 eine Laseranordnung für die Materialbearbeitung, welche zu diesem Zweck wenigstens eine Verzögerungsplatte aufweist. Die EP 1 742 307 B1 beschreibt eine Vorrichtung, bei welcher zu diesem Zweck ein Phasenschieberspiegel verwendet wird. Aus der DE 10 2007 033 567 A1 ist es bekannt, einen Laserresonator mit einer Phasenschiebe-Einrichtung zu verwenden, um innerhalb des Laserresonators radial oder azimutal polarisierte Laserstrahlung anzuregen bzw. zu stabilisieren.

## Aufgabe der Erfindung

Der Erfindung liegt die Aufgabe zugrunde, eine EUV-Strahlungserzeugungsvorrichtung bereitzustellen, bei der eine durch den thermischen Linseneffekt hervorgerufene, nicht rotationssymmetrische Veränderung des Strahlprofils des Laserstrahls im Wesentlichen kompensiert wird.

## Gegenstand der Erfindung

Diese Aufgabe wird gelöst durch eine EUV-Strahlungserzeugungsvorrichtung, umfassend: eine Treiberlaseranordnung zur Erzeugung eines Laserstrahls, eine Vakuum-Kammer, in der ein Target-Material anordenbar ist, eine Strahlführungseinrichtung zur Führung des Laserstrahls von der Treiberlasereinrichtung in einer ersten Richtung auf das Target-Material, sowie eine Polarisatoranordnung, umfassend: eine erste Polarisatoreinrichtung mit einer ersten Polarisator-Fläche zur linearen Polarisation eines in der ersten Richtung propagierenden Laserstrahls, der unter einem ersten, von 0° verschiedenen Winkel auf die erste Polarisator-Fläche auftrifft, eine Phasenschiebe-Einrichtung zur Drehung einer Polarisationsrichtung des an der ersten Polarisator-Fläche transmittierten, linear polarisierten Laserstrahls um einen vorgegebenen Drehwinkel, der zwischen 80° und 100° beträgt, sowie eine zweite Polarisatoreinrichtung mit einer zweiten Polarisator-Fläche, auf die der linear polarisierte Laserstrahl nach dem Durchlaufen der Phasenschiebe-Einrichtung unter einem zweiten, von 0° verschiedenen Winkel auftrifft und von der zweiten Polarisator-Fläche transmittiert wird, wobei eine Einfallsebene des auf die zweite Polarisator-Fläche auftreffenden Laserstrahls gegenüber einer Einfallsebene des auf die erste Polarisator-Fläche auftreffenden Laserstrahls um den vorgegebenen Drehwinkel gedreht ist.

Die Polarisatoranordnung kann zur linearen Polarisation des von der Treiberlasereinrichtung in Richtung auf das Target-Material (d.h. in einer ersten Richtung) propagierenden Laserstrahls sowie zur Filterung bzw. zur Umlenkung eines vom Target-Material oder einem anderen Objekt, beispielsweise einer Blende, in einer zweiten Richtung auf die Treiberlaseranordnung zurück reflektierten Laserstrahls dienen, wenn die Polarisationsrichtung des zurück reflektierten Laserstrahl senkrecht zur Polarisationsrichtung des in der Vorwärtsrichtung propagierenden Laserstrahls ausgerichtet ist.

Zur Erzeugung des in die Polarisatoranordnung eintretenden Laserstrahls dient eine Strahlquelle der

Treiberlaseranordnung, beispielsweise ein $CO_2$-Laser. Die erste Polarisator-Fläche und die zweite Polarisator-Fläche sind typischer Weise jeweils an einer Vorderseite eines Trägerelements gebildet, das aus einem die Wellenlänge des Laserstrahls transmittierenden Material (Trägermaterial) hergestellt ist. Handelt es sich bei dem Laserstrahl um einen $CO_2$-Laserstrahl mit einer Wellenlänge von ca. 10,6 $\mu$m, kann es sich bei dem transmittierenden Material beispielsweise um Zinkselenid handeln. Der von der Polarisator-Fläche bzw. von dem Trägerelement transmittierte, linear polarisierte Laserstrahl kann ggf. auch geringfügige Strahlungsanteile mit einer zur ersten senkrechten zweiten Polarisationsrichtung aufweisen; auch ein solcher Laserstrahl wird im Sinne dieser Anmeldung als linear polarisierter Laserstrahl bezeichnet. Die Art des transmittierenden Trägermaterials ist an die Wellenlänge des verwendeten Laserstrahls angepasst. Bei kleineren Wellenlängen im nahen IR-Wellenlängenbereich bzw. im sichtbaren Wellenlängenbereich kann beispielsweise Quarzglas als Material für das Trägerelement verwendet werden.

Der auf die erste Polarisator-Fläche auftreffende Laserstrahl kann bereits linear polarisiert sein, und zwar derart, dass dieser dieser beim Durchtritt durch die erste Polarisatoreinrichtung und durch die zweite Polarisatoreinrichtung nicht bzw. nur geringfügig abgeschwächt wird. Typischer Weise ist ein solcher Laserstrahl p-polarisiert bezüglich der Einfallsebene auf die erste Polarisator-Fläche und entsprechend p-polarisiert bezüglich der Einfallsebene auf die zweite Polarisator-Fläche. Der Durchtritt eines bereits linear polarisierten Laserstrahls durch die Polarisatoranordnung, der in der Polarisatoranordnung seine lineare Polarisation beibehält, kann sinnvoll sein, wenn dieser Laserstrahl an einem oder mehreren Objekten (z.B. einem Target-Material, s.o.), die nach der Polarisatoranordnung angeordnet sind, zur Polarisatoranordnung zurück reflektiert wird und die Polarisationsrichtung des Laserstrahls an mindestens einer weiteren Phasenschiebe-Einrichtung gedreht wird, so dass die Polarisationsrichtung des erneut auf die Polarisatoranordnung treffenden, zurück reflektierten Laserstrahls senkrecht zur Polarisationsrichtung des in Vorwärtsrichtung propagierenden Laserstrahls ausgerichtet ist. Bei der weiteren Phasenschiebe-Einrichtung kann es sich beispielsweise um einen phasenschiebenden Spiegel handeln, der beim Durchlauf des Laserstrahls in Vorwärtsrichtung sowie beim Durchlauf des Laserstrahls in Rückwärtsrichtung jeweils einen Gangunterschied von $\lambda/4$ erzeugt, wodurch insgesamt ein Gangunterschied von $\lambda/2$ entsteht. Durch die Drehung der Polarisationsrichtung wird der zurück reflektierte Laserstrahl von der Polarisatoranordnung umgelenkt bzw. reflektiert, so dass dieser nicht mehr zur Strahlquelle zurück gelangen kann und die Polarisatoranordnung als optischer Isolator wirkt.

Die Erfinder haben erkannt, dass der zu polarisierende Laserstrahl, der typischer Weise ein rotationssymmetrisches, beispielsweise kreisförmiges Strahlprofil aufweist, beim Einfall unter einem (von 0° verschiedenen) Winkel auf die erste Polarisator-Fläche an dieser in einem ellipsenförmigen Oberflächenbereich auftrifft. Die thermische Linse des transmittierenden Materials, an dem die erste Polarisator-Fläche gebildet ist, wirkt daher nicht nur wie eine sphärische Linse, sondern hat zusätzlich die Wirkung einer Zylinderlinse: Die Wirkung der thermischen Linse ist in einer ersten Richtung, die entlang der langen Achse des ellipsenförmigen Oberflächenbereichs verläuft, größer als in einer zweiten, zur ersten senkrechten Richtung, die entlang der kurzen Achse des ellipsenförmigen Oberflächenbereichs verläuft. Die thermische Zyinderlinse wirkt zusätzlich auch wie eine zum Laserstrahl verkippte Linse, die zu einem Astigmatismus führt. Der linear polarisierte Laserstrahl, der die Strahlteiler-Fläche und das transmittierende Material durchlaufen hat, weist aufgrund des thermischen Linseneffekts ebenfalls ein nicht rotationssymmetrisches, ellipsenförmiges Strahlprofil auf, das typischer Weise schlechter zu handhaben ist als ein rotationssymmetrisches, beispielsweise kreisförmiges Strahlprofil.

Um das Strahlprofil zu symmetrisieren bzw. um den thermischen Zylinderlinseneffekt inklusive des Effekts der verkippten Linse zu kompensieren, so dass ein linear polarisierter Laserstrahl mit rotationssymmetrischem, insbesondere kreisförmigem Strahlprofil entsteht, könnte ggf. ein kompensierendes optisches Element, z.B. in Form einer Zylinderlinse und/oder eines zylindrischen Spiegels mit fester Brennweite, verwendet werden. Die Stärke der thermischen Zylinderlinse, genauer gesagt die Brennweite der thermischen Zylinderlinse, die von der ersten Polarisatoreinrichtung erzeugt wird, ist jedoch abhängig von der auftreffenden Laserleistung, so dass ein kompensierendes optisches Element, welches eine konstante Brennweite aufweist, die thermische Zylinderlinse nicht leistungsunabhängig kompensieren kann.

Es wird daher vorgeschlagen, zur Kompensation der thermischen Zylinderlinse der ersten Polarisatoreinrichtung eine zweite Polarisatoreinrichtung zu verwenden, die ebenfalls eine thermische Zylinderlinse erzeugt, die im Wesentlichen senkrecht zur thermischen Zylinderlinse der ersten Polarisatoreinrichtung wirkt. Die beiden Zylinderlinsen überlagern sich, so dass von den beiden Polarisatoreinrichtungen insgesamt eine sphärische bzw. rotationssymmetrische thermische Linse erzeugt wird. Die sphärische Linse bzw. der sphärische Anteil der thermischen Linse der Polarisatoranordnung führt zu einem Abbildungsfehler in Form eines Astigmatismus, der im Wesentlichen dem Abstand zwischen den beiden Polarisatoreinrichtungen entspricht, das Strahlprofil des an der zweiten Polarisator-Fläche transmittierten linear polarisierten Laserstrahls bleibt aber (annähernd) rotationssymmetrisch bzw. kreisförmig.

Um die zweite Polarisatoreinrichtung zur Kompensation des thermischen Zylinderlinseneffekts der ersten Polarisatoreinrichtung verwenden zu können, ist es erforderlich, die Polarisationsrichtung des an der ersten Polarisator-Fläche transmittierten linear polarisierten Laserstrahls so zu drehen, dass ein erheblicher Anteil des linear polarisierten Laserstrahls von der zweiten Polarisationseinrichtung transmittiert wird, ohne dass das Strahlprofil des linear polarisierten Laserstrahls ebenfalls gedreht wird. Zur Erzeugung einer solchen Drehung der Polarisationsrichtung ohne eine gleichzeitige Drehung des Strahlprofils wird eine Phasenschiebe-Einrichtung verwendet. Würde hingegen beispielsweise mittels eines Periskops sowohl die Polarisationsrichtung als auch das Strahlprofil des linear polarisierten Laserstrahls gedreht, würde der thermische Zylinderlinseneffekt der ersten Polarisatoreinrichtung durch die zweite Polarisatoreinrichtung noch verstärkt.

Der vorgegebene Drehwinkel der Phasenschiebe-Einrichtung beträgt daher zwischen 80° und 100°, bevorzugt 90°. Idealer Weise sollte der Drehwinkel, der durch die Phasenschiebe-Einrichtung erzeugt wird, bei 90° liegen. Dies kann erreicht werden, wenn die Phasenschiebe-Einrichtung eine Phasenverschiebung von 180° bzw. einen Gangunterschied von $\lambda/2$ erzeugt, wobei $\lambda$ die Wellenlänge des Laserstrahls bezeichnet. Bei einer Phasenverschiebung von 180° bzw. bei einem Gangunterschied von $\lambda/2$ bleibt der Laserstrahl linear polarisiert. Bei einer geringfügigen Abweichung von einer Phasenverschiebung von $\lambda/2$ wird der linear polarisierte Laserstrahl typischer Weise elliptisch polarisiert, wird aber durch die im Strahlweg nachfolgende zweite Polarisatoreinrichtung erneut in einen (im Wesentlichen) linear polarisierten Laserstrahl umgewandelt.

Wird ein Drehwinkel von 90° verwendet, ist die Einfallsebene des auf die erste Polarisator-Fläche auftreffenden Laserstrahls senkrecht zur Einfallsebene des auf die zweite Polarisator-Fläche auftreffenden Laserstrahls ausgerichtet. Wie weiter oben beschrieben wurde, wirken in diesem Fall die beiden thermischen Zylinderlinsen, inklusive des Effekts der verkippten Linse, in zwei zueinander senkrechte Richtungen, so dass ein einfallender Laserstrahl mit rotationssymmetrischem, insbesondere kreisförmigem Strahlprofil die Polarisatoranordnung mit einem (im Wesentlichen) rotationssymmetrischen, insbesondere kreisförmigen Strahlprofil verlässt. Auch die Divergenz des Laserstrahls ist beim Austritt aus der Polarisatoranordnung in beiden Richtungen gleich, so dass der Laserstrahl sein rotationssymmetrisches Strahlprofil auch bei der weiteren Propagation beibehält. Sind die beiden Richtungen, in denen die thermischen Zylinderlinsen wirken, nicht senkrecht zueinander, wird ein ggf. geringfügig von einer Kreisform abweichendes Strahlprofil erzeugt. Ein geringfügig von 90° abweichender Drehwinkel, der beispielsweise zwischen 80° und 100° liegen kann, führt in der Regel nicht zu einer optimalen Kompensation, kann aber ggf. dennoch tolerierbar sein.

Bei einer weiteren Ausführungsform sind der erste Winkel und der zweite Winkel gleich groß, d.h. der Laserstrahl trifft auf die erste Polarisator-Fläche und auf die zweite Polarisator-Fläche unter demselben (von 0° verschiedenen) Winkel auf. Dies ist günstig, um in beiden Polarisatoreinrichtungen eine vom Betrag her gleich große thermische Zylinderlinse zu erzeugen. Es ist aber ggf. auch möglich, die beiden Winkel (geringfügig) unterschiedlich zu wählen und gleichzeitig (geringfügig) von einem Drehwinkel von 90° abzuweichen, wobei die jeweiligen Abweichungen so gewählt sind, dass insgesamt das Strahlprofil des Laserstrahls beim Durchlaufen der Polarisatoranordnung im Wesentlichen erhalten bleibt.

Wie weiter oben dargestellt wurde, kann die Polarisatoranordnung dazu dienen, einen in einer zweiten, der ersten entgegen gesetzten Richtung propagierenden Laserstrahl zu filtern bzw. zu reflektieren, dessen Polarisationsrichtung senkrecht zur Polarisationsrichtung des in der ersten Richtung propagierenden Laserstrahls ausgerichtet ist. Für die Reflexion bzw. die Filterung des in der zweiten Richtung propagierenden Laserstrahls können ggf. die erste Polarisator-Fläche und die zweite Polarisator-Fläche der Polarisatoranordnung verwendet werden.

Bei einer weiteren Ausführungsform weist die erste Polarisatoreinrichtung eine dritte Polarisator-Fläche auf und/oder die zweite Polarisatoreinrichtung weist eine vierte Polarisator-Fläche zur linearen Polarisation eines in einer zweiten, der ersten entgegen gesetzten Richtung propagierenden Laserstrahls auf, wobei der in der zweiten Richtung propagierende Laserstrahl unter dem ersten Winkel auf die dritte Polarisator-Fläche und/oder unter dem zweiten Winkel auf die vierte Polarisator-Fläche auftrifft. Die erste und dritte Polarisator-Fläche bzw. die zweite und vierte Polarisator-Fläche können insbesondere an zwei gegenüberliegenden Seiten eines Trägerelements der ersten bzw. der zweiten Polarisatoreinrichtung gebildet sein. Insbesondere kann es sich bei dem Trägerelement um eine planparallele Platte handeln. Durch die dritte bzw. die vierte Polarisator-Fläche kann ein in der zweiten Richtung propagierender Laserstrahl, der eine Polarisationsrichtung aufweist, die gegenüber der Polarisationsrichtung des in der ersten Richtung propagierenden Laserstrahls um 90° gedreht ist, reflektiert und somit gefiltert werden, so dass die Polarisatoranordnung als Schutz vor Rückreflexionen bzw. als optischer Isolator dienen kann. Idealer Weise wird der in der zweiten Richtung propagierende Laserstrahl an der vierten Polarisator-Fläche der zweiten Polarisatoreinrichtung bereits vollständig umgelenkt bzw. reflektiert, so dass dieser nicht mehr auf die dritte Polarisator-Fläche auftrifft. Erforderlichenfalls kann ein an der vierten Polarisator-Fläche transmittierter Strahlungsanteil des in der zweiten Richtung propagierenden Laserstrahls an der dritten Polarisator-Fläche umgelenkt bzw. reflektiert werden.

Bei einer weiteren Ausführungsform entspricht/entsprechen der erste Winkel, unter dem der Laserstrahl auf die erste und/oder dritte Polarisator-Fläche auftrifft und/oder der zweite Winkel, unter dem der linear polarisierte Laserstrahl auf die zweite und/oder vierte Polarisator-Fläche auftrifft, dem Brewster-Winkel. Trifft Laserstrahlung unter dem Brewster-Winkel auf die Polarisator-Fläche, wird an der Polarisator-Fläche ein Strahlungsanteil mit im Wesentlichen einer einzigen Polarisationsrichtung (s-Polarisation) reflektiert, was die Wirkung der Polarisationseinrichtung verstärkt.

Der Brewster-Winkel $\alpha_B$ an der Polarisator-Fläche bzw. einer Grenzfläche zwischen einem optisch dünneren und einem optisch dichteren Medium ist durch folgende Formel gegeben:

$$\alpha_B = \arctan\left(n_2 / n_1\right),$$

wobei $n_2$ den Realteil des Brechungsindexes des optisch dichteren Mediums und $n_1$ den Realteil des Brechungsindexes des optisch dünneren Mediums bezeichnet (typischer Weise Luft bzw. Vakuum mit $n_1 = 1{,}00$). Der Brewster-Winkel $\alpha_B$ ist somit bei einer in Umgebungsluft angeordneten Polarisatoreinrichtung durch den Brechungsindex $n_2$ des transmissiven Materials bestimmt, an dem die Polarisator-Fläche gebildet ist.

Bei einer weiteren Ausführungsform ist die erste Polarisator-Fläche an einem Trägerelement aus einem transmittierenden Material, bevorzugt einer planparallelen Platte, gebildet und/oder die zweite Polarisator-Fläche ist an einem Trägerelement aus einem transmittierenden Material, bevorzugt einer planparallelen Platte, gebildet. Wie weiter oben beschrieben wurde, trifft der Laserstrahl idealer Weise unter dem Brewster-Winkel $\alpha_B$ des jeweiligen transmissiven Materials auf die Polarisator-Fläche. Ein plattenförmiges Trägerelement hat sich als günstig erwiesen, da dieses abgesehen von der thermischen Linse nahezu keinen Einfluss auf den Laserstrahl hat. Die Verwendung eines plattenförmigen Trägerelements ist zudem günstig, da die thermische Linse mit der Länge des von dem Laserstrahl durchlaufenen Volumens des transmissiven Materials zunimmt.

Bei einer Weiterbildung sind die erste Polarisator-Fläche und die dritte Polarisator-Fläche an gegenüberliegenden Seiten des Trägerelements der ersten Polarisatoreinrichtung und/oder die zweite Polarisator-Fläche und die vierte Polarisator-Fläche sind an gegenüber liegenden Seiten des Trägerelements der zweiten Polarisatoreinrichtung gebildet. In diesem Fall ist es besonders vorteilhaft, wenn das Trägerelement als planparallele Platte ausgebildet ist, da bei einer solchen Platte der Einfallswinkel an der ersten Seite mit dem Ausfallswinkel an der zweiten Seite übereinstimmt. Der rückreflektierte Laserstrahl trifft somit auf die zweite Seite der Platte unter demselben Winkel auf, unter dem der in Vorwärtsrichtung propagierende Laserstrahl auf die erste Seite der Platte auftrifft.

Bei einer Weiterbildung weist/weisen das Trägerelement der ersten Polarisatoreinrichtung an der ersten und/oder der dritten Polarisator-Fläche und/oder das Trägerelement der zweiten Polarisatoreinrichtung an der zweiten und/oder der vierten Polarisator-Fläche eine polarisationsselektive Beschichtung auf. Wie weiter oben beschrieben wurde, kann es sich bei den beiden Polarisatoreinrichtungen um Dünnfilm-Polarisatoren handeln, bei denen auf dem Trägerelement eine polarisationsselektive Beschichtung aufgebracht ist. Es versteht sich aber, dass ggf. auf eine polarisationsselektive Beschichtung verzichtet werden kann, insbesondere wenn die Polarisatoreinrichtung mehrere parallel zueinander angeordnete Polarisator-Flächen aufweist, die im Strahlweg hintereinander angeordnet sind.

Bei einer weiteren Ausführungsform sind die erste Polarisatoreinrichtung und die zweite Polarisatoreinrichtung baugleich. In diesem Fall erzeugen beide Polarisatoreinrichtungen bei unter demselben Winkel auf die erste bzw. zweite Polarisator-Fläche auftreffendem Laserstrahl eine betragsmäßig gleich große thermische Zylinderlinse. Zwei Polarisatoreinrichtungen sind baugleich, wenn diese ein in seiner Geometrie gleiches Trägerelement aus demselben transmissiven Material und (falls vorhanden) dieselbe polarisationsselektive Beschichtung aufweisen.

Bei einer Ausführungsform weist die Phasenschiebe-Einrichtung mindestens ein transmissives phasenschiebendes optisches Element, bevorzugt eine Verzögerungsplatte, auf. Wie weiter oben beschrieben wurde, handelt es sich bei der Verzögerungsplatte typischer Weise um eine $\lambda/2$-Verzögerungsplatte, die eine Phasenverschiebung von 180° bzw. einen Gangunterschied von $\lambda/2$ und somit eine Drehung der Polarisationsrichtung um 90° erzeugt, wenn der Laserstrahl senkrecht auf die Verzögerungsplatte auftrifft.

Bei einer weiteren Ausführungsform weist die Phasenschiebe-Einrichtung mindestens ein reflektierendes phasenschiebendes optisches Element, bevorzugt einen phasenschiebenden Spiegel, auf. Kommerziell erhältliche phasenschiebende Spiegel erzeugen häufig eine Phasenverschiebung von 90° bzw. einen Gangunterschied von $\lambda/4$. Bei einer solchen Phasenverschiebung wird ein linear polarisierter Laserstrahl in einen zirkular polarisierten Laserstrahl umgewandelt, und umgekehrt. Zwei im Strahlweg aufeinander folgende phasenschiebende Spiegel, die jeweils eine Phasenverschiebung von 90° bzw. einen Gangunterschied von $\lambda/4$ bewirken, drehen die Polarisationsrichtung eines linear polarisierten Laserstrahls um 90°. Die Phasenschiebe-Einrichtung weist daher in diesem Fall typischer Weise zwei phasenschiebende Spiegel auf, um die Phasenverschiebung von 180° bzw. den Gangunterschied von $\lambda/2$ zu erzeugen. Es versteht sich, dass die Phasenschiebe-Einrichtung ggf. sowohl transmittierende als auch reflektierende phasenschiebende Elemente aufweisen kann.

Bei einer weiteren Ausführungsform umfasst die EUV-Strahlungserzeugungsvorrichtung zusätzlich mindestens eine weitere Phasenschiebe-Einrichtung, die zwischen der Polarisatoranordnung und dem Target-Material angeordnet ist, wobei die weitere Phasenschiebe-Einrichtung zur Erzeugung eines am Target-Material reflektierten, auf die Polarisatoranordnung in einer zweiten, der ersten entgegen gesetzten Richtung auftreffenden Laserstrahls ausgebildet ist, dessen Polarisationsrichtung senkrecht zur Polsarisationsrichtung des in der ersten Richtung propagierenden Laserstrahls verläuft. Die Polarisationsrichtung des Laserstrahls kann gegebenenfalls beim Auftreffen bzw. bei der Reflexion am Target-Material gedreht werden, es ist aber auch möglich, dass weitere polarisationsdrehende bzw. Phasenschiebe-Einrichtungen zwischen der Polarisatoranordnung und dem Target-Material angeordnet sind, welche eine solche Drehung der Polarisationsrichtung bewirken, beispielsweise ein phasenschiebender Spiegel, der beim doppelten Durchgang des Laserstrahls einen Gangunterschied von $\lambda/2$ erzeugt. Hat das Target-Material oder haben ggf. weitere Elemente im Strahlengang des Laserstrahls ebenfalls polarisationsdrehende Wirkung, wird die Wirkung der weiteren Phasenschiebe-Einrichtung bzw. der polarisationsdrehenden Einrichtung derart angepasst, dass sich insgesamt eine Drehung um 90° zwischen der Polarisationsrichtung das aus der Polarisatoranordnung austretenden Laserstrahls und dem in Rückwärtsrichtung in die Polarisatoranordnung eintretenden Laserstrahls ergibt.

Die Polarisatoranordnung kann in diesem Fall als optischer Isolator dienen, der ein Eintreten des vom Target-Material zurück reflektierten Laserstrahls in die Treiberlasereinrichtung verhindert.

Die Treiberlaseranordnung der EUV-Strahlungserzeugungsvorrichtung weist typischer Weise eine oder ggf. mehrere Strahlquellen zur Erzeugung eines oder ggf. mehrerer (gepulster) Laserstrahlen bzw. von so genannten Seed-Pulsen auf, die in einem, typischer Weise in mehreren optischen Verstärkern einer Verstärkeranordnung auf hohe Laserleistungen von mehreren kW, ggf. von 10 kW oder darüber verstärkt werden. Die bzw. eine Polarisatoranordnung kann in der Treiberlaseranordnung oder in der Strahlführungseinrichtung angeordnet sein, um ggf. den von der Strahlquelle erzeugten Laserstrahl zu polarisieren und/oder den am Target-Material zurück reflektierten Laserstrahl zu filtern bzw. umzulenken. Die Polarisatoranordnung kann insbesondere im Strahlweg vor der Verstärkeranordnung eingesetzt werden, da die dort verwendete Laserleistung zwar bereits recht groß, aber typischer Weise nicht groß genug ist, um die Polarisatoreinrichtungen der Polarisatoranordnung zu schädigen.

Es versteht sich, dass die hier beschriebene Polarisatoranordnung auch bei anderen Anwendungen, beispielsweise in der Materialbearbeitung, z.B. bei Laserbearbeitungsmaschinen, verwendet werden kann, um einen (linear) polarisierten Laserstrahl mit einem symmetrischen Strahlprofil mit Hilfe von in Transmission betriebenen Polarisatoreinrichtungen zu erzeugen bzw. um einen Rückreflexschutz zu ermöglichen. Die Verwendung von in Transmission betriebenen Polarisatoreinrichtungen hat gegenüber der Verwendung von in Reflexion betriebenen Polarisatoreinrichtungen den Vorteil einer erleichterten Justage. Zudem bestünde bei der Verwendung von in Reflexion betriebenen Polarisatoreinrichtungen die Gefahr, dass der rücklaufende Laserstrahl die Polarisatoreinrichtung zerstört, da dieser typischer Weise eine deutlich höhere Leistung als der in Vorwärtsrichtung propagierende Laserstrahl aufweist. Die Absorption des Trägermaterials für transmittierte (p-polarisierte) Laserstrahlung ist jedoch typischer Weise deutlich größer als für reflektierte (s-polarisierte) Laserstrahlung, so dass dieser an einer jeweiligen Polarisator-Fläche reflektiert und nicht transmittiert werden sollte. Bei der hier beschriebenen Polarisatoranordnung ist zudem die Kompensation der thermischen Zylinderlinse der ersten Polarisatoreinrichtung durch die zweite Polarisatoreinrichtung auf die Laserleistung abgestimmt, d.h. diese verändert sich bei der Variation der Laserleistung entsprechend zur thermischen Zylinderlinse der ersten Polarisatoreinrichtung.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a,b   schematische Darstellungen einer Polarisatoranordnung mit einer Phasenschiebe-Einrichtung in Form einer $\lambda/2$-Verzögerungsplatte, die von einem Laserstrahl in einer ersten Richtung durchlaufen wird,

Fig. 2a,b   schematische Darstellungen der Polarisatoranordnung von Fig. 1a,b, an der ein in entgegen gesetzter Richtung propagierender Laserstrahl reflektiert bzw. umgelenkt wird,

Fig. 3   eine schematische Darstellung einer Polarisatoranordnung mit einer Phasenschiebe-Einrichtung in Form von zwei phasenschiebenden Spiegeln,

Fign. 4a,b   Darstellungen eines Strahlprofils eines linear polarisierten Laserstrahls nach einer ersten Polarisatoreinrichtung und nach einer zweiten Polarisatoreinrichtung der Polarisatoranordnung, sowie

Fig. 5   eine schematische Darstellung einer EUV-Strahlungserzeugungsvorrichtung mit einer Polarisatoranordnung gemäß Fig. 1a,b, Fig. 2a,b bzw. Fig. 3.

In der folgenden Beschreibung der Zeichnungen werden für gleiche bzw. funktionsgleiche Bauteile identische Bezugszeichen verwendet.

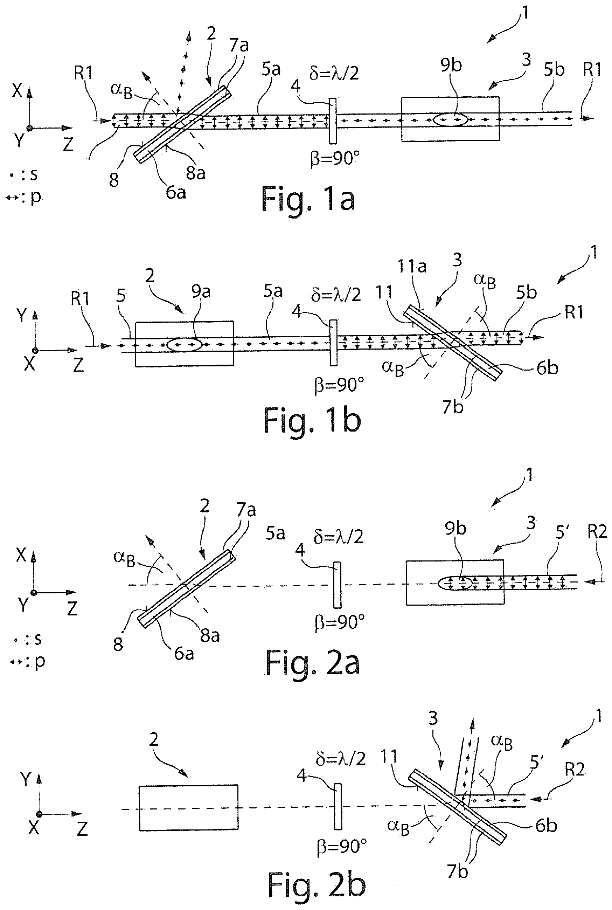

In **Fig. 1a,b** ist eine Polarisatoranordnung 1 gezeigt, die eine erste Polarisatoreinrichtung 2 und eine zweite Polarisatoreinrichtung 3 sowie eine zwischen der ersten Polarisatoreinrichtung 2 und der zweiten Polarisatoreinrichtung 3 angeordnete Phasenschiebe-Einrichtung 4 in Form einer $\lambda/2$-Verzögerungsplatte aufweist. Die Phasenschiebe-Einrichtung 4 erzeugt einen Gangunterschied $\delta$ von $\lambda/2$ für einen Laserstrahl 5, der im Wesentlichen p-polarisiert in einer ersten Richtung R1 in die Polarisatoranordnung 1 eintritt. Der Laserstrahl 5 weist im gezeigten Beispiel eine Wellenlänge $\lambda$ von 10,6 $\mu$m auf und wird von einem $CO_2$-Laser erzeugt. Es versteht sich, dass der Laserstrahl 5 auch eine andere Wellenlänge $\lambda$ aufweisen kann, beispielsweise eine Wellenlänge $\lambda$ von ca. 1 $\mu$m oder weniger.

Die erste Polarisatoreinrichtung 2 und die zweite Polarisatoreinrichtung 3 sind baugleich und weisen jeweils ein Trägerelement in Form einer planparallelen Platte 6a, 6b auf, an deren Vorderseite, d.h. an der dem auftreffenden, in einer ersten Richtung R1 propagierenden Laserstrahl 5 zugewandten Seite, eine polarisationsselektive Beschichtung 7a, 7b aufgebracht ist. Bei dem Material der Trägerelemente 6a, 6b handelt es sich um Zinkselenid, es versteht sich aber, dass auch andere Materialien verwendet werden können, die bei der Wellenlänge $\lambda$ des Laserstrahls 5 transparent sind, beispiesweise Quarzglas für eine Wellenlänge $\lambda$ im sichtbaren oder im nahen IR-Wellenlängenbereich. Die Vorderseite des Trägerelements 6a der ersten Polarisatoreinrichtung 2 mit der polarisationsselektiven Beschichtung 7a bildet eine erste Polarisator-Fläche 8 (bzw. Strahlteiler-Fläche), an welcher der zunächst unpolarisierte Laserstrahl 5 in einen von der ersten Polarisatoreinrichtung 2 bzw. der ersten Strahlteiler-Fläche 8 transmittierten Laserstrahl 5a und in einen von der ersten Polarisationseinrichtung 2 reflektierten Strahlungsanteil aufgeteilt wird, der in Fig. 1a nur angedeutet ist, da der auftreffende Laserstrahl 5 im Wesentlichen p-polarisiert ist.

Bei der in Fig. 1a,b gezeigten Polarisatoranordnung 1 trifft der einfallende Laserstrahl 5 unter einem ersten (Einfalls-)Winkel auf die Polarisator-Fläche 8, der dem Brewster-Winkel $\alpha_B$ des ZnSe-Materials des Trägerelements 6a entspricht. Der an der ersten Polarisator-Fläche 8 reflektierte Strahlungsanteil ist aufgrund der Anordnung der Polarisator-Fläche 8 unter dem Brewster-Winkel $\alpha_B$ linear polarisiert, und zwar im Wesentlichen senkrecht zur Einfallsebene X, Z des einfallenden Laserstrahls 5 (s-Polarisation), vgl. das in Fig. 1a,b gezeigte XYZ-Koordinatensystem. Der von der ersten Polarisatoreinrichtung 2 transmittierte Laserstrahl 5a ist demgegenüber im Wesentlichen parallel zur Einfallsebene X, Z des Laserstrahls 5 auf die erste Polarisator-Fläche 8 linear polarisiert (p-Polarisation). Die polarisationsselektive Beschichtung 7a, 7b dient zur Verstärkung der Trennung des Laserstrahls 5 in den s-polarisierten und den p-polarisierten Strahlungsanteil.

Wie anhand von Fig. 1b zu erkennen ist, durchläuft der Laserstrahl 5 die erste Polarisator-Fläche 8 in einem ellipsenförmigen Oberflächenbereich 9a, so dass das Material des Trägerelements 6a der ersten Polarisatoreinrichtung 2 entlang seiner Dicke durch den Laserstrahl 5 in einem im Wesentlichen ellipsenförmigen Volumenbereich aufgeheizt wird. Aufgrund der Absorption des Materials des Trägerelements 6 bzw. der polarisationsselektiven Beschichtung 7a für die hohe Leistung des Laserstrahls 5, die z.B. im Bereich von mehreren 100 W oder darüber liegen kann, wird im durchstrahlten Volumen des Trägerelements 6a ein Temperaturgradient und damit einhergehend eine thermische Linse erzeugt, d.h. der Brechungsindex des Materials des Trägerelements 6a verändert sich in Abhängigkeit von der Laserleistung.

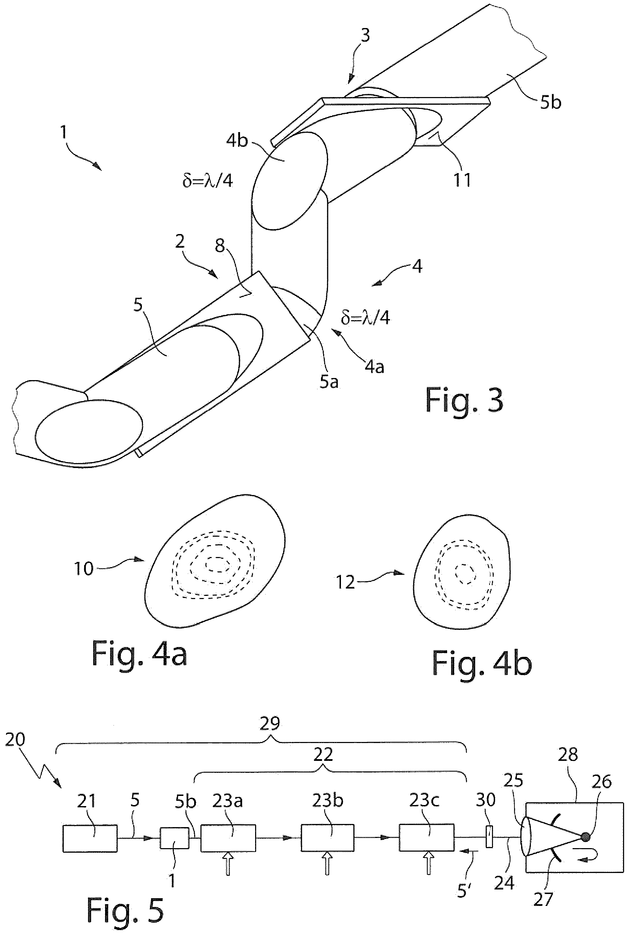

Da das von dem Laserstrahl 5 durchstrahlte Volumen im Wesentlichen ellipsenförmig ist, wird von der ersten Polarisatoreinrichtung 2 eine thermische Linse erzeugt, die wie eine sphärische Linse und wie eine zusätzliche Zylinderlinse wirken und die zu einer (unerwünschten) Fokussierung des Laserstrahls 5 führen. Die thermische Zylinderlinse wirkt aufgrund der Verkippung der thermischen Linse im Wesentlichen in X-Richtung, so dass das runde Strahlprofil des einfallenden Laserstrahls 5 in ein asymmetrisches Strahlprofil 10 des von der ersten Polarisatoreinrichtung 2 transmittierten Laserstrahls 4a umgewandelt wird, wie dieses stark schematisiert in Fig. 4a dargestellt ist.

Um den Effekt der thermischen Zylinderlinse der ersten Polarisatoreinrichtung 2 auf den transmittierten, linear polarisierten Laserstrahl 5a zu korrigieren und auf diese Weise ein im Wesentlichen symmetrisches (rundes) Strahlprofil zu erzeugen, ist in der Polarisatoranordnung 1 die zweite Polarisatoreinrichtung 3 vorgesehen. Die zweite Polarisatoreinrichtung 3 ist gegenüber der ersten Polarisatoreinrichtung 2 um einen Drehwinkel $\beta$ von 90° um die Z-Achse gedreht, wie anhand eines Vergleichs zwischen Fig. 1a und Fig. 1b erkennbar ist. Der von der ersten Polarisatoreinrichtung 2 transmittierte Laserstrahl 5a trifft daher in einer Einfallsebene Y, Z auf eine zweite Polarisator-Fläche 11 der zweiten Polarisatoreinrichtung 3 auf, die um den Drehwinkel $\beta$ von 90° gegenüber der Einfallsebene X, Z gedreht ist, in welcher der Laserstrahl 5 auf die erste Polarisator-Fläche 8 der ersten Polarisatoreinrichtung 2 auftrifft. Ein ellipsenförmiger Oberflächenbereich 9b, an dem der Laserstrahl 5a auf die zweite Polarisator-Fläche 11 auftrifft, ist daher ebenfalls um 90° gedreht. Die thermische Zylinderlinse der zweiten Polarisatoreinrichtung 3 wirkt somit senkrecht zur thermischen Zylinderlinse der ersten Polarisatoreinrichtung 2, wodurch der von der zweiten Polarisatoreinrichtung 3 transmittierte Laserstrahl 5b mit im Wesentlichen rotationssymmetrischem Querschnitt bzw. Strahlprofil 12 propagiert, wie dies stark schematisch in Fig. 4b gezeigt ist.

Damit der von der ersten Polarisatoreinrichtung 2 transmittierte, im Wesentlichen linear polarisierte Laserstrahl 5a von der zweiten, unter dem Drehwinkel $\beta$ von 90° angeordneten Polarisatoreinrichtung 3 transmittiert wird, ist es erforderlich, die Polarisationsrichtung p des transmittierten Laserstrahls 5a ebenfalls um den Drehwinkel $\beta$ zu drehen, ohne dass hierbei das Strahlprofil 10 des Laserstrahls 5a ebenfalls gedreht wird. Zu diesem Zweck dient bei dem in Fig. 1a,b gezeigten Beispiel die $\lambda/2$-Verzögerungsplatte 4, welche die Polarisationsrichtung p bezüglich der Einfallsebene X, Z der ersten Polarisatoreinrichtung 2 um 90° dreht, so dass der von der ersten Polarisatoreinrichtung 2 transmittierte Laserstrahl 5a nach dem Durchlaufen der $\lambda/2$-Verzögerungsplatte 4 s-polarisiert ist. Da die Einfallsebene Y, Z des transmittierten Laserstrahls 5a auf die zweite Polarisator-Fläche 11 der zweiten Polarisatoreinrichtung 3 gegenüber der Einfallsebene X, Z der ersten Polarisatoreinrichtung 2 um 90° gedreht ist, ist der transmittierte Laserstrahl 5a bezüglich der Einfallsebene Y, Z auf die zweite Polarisator-Fläche 11 p-polarisiert, so dass die Leistung des Laserstrahls 5b beim Durchlaufen der zweiten Polarisatoreinrichtung 3 erhalten bleibt bzw. nur geringfügig reduziert wird.

Die in Fig. 1a,b gezeigte Polarisatoranordnung 1 kann auch dazu verwendet werden, einen in einer zweiten, der ersten entgegen gesetzten Richtung R2 propagierenden Laserstrahl 5' zu filtern, genauer gesagt umzulenken bzw. zu reflektieren, wie dies in Fig. 2a,b dargestellt ist. Bei dem in der zweiten Richtung R2 propagierenden Laserstrahl 5' kann es sich insbesondere um einen rückreflektierten Strahlungsanteil des in der ersten Richtung R1 propagierenden Laserstrahls 5 handeln. Der in der zweiten Richtung R2 propagierende Laserstrahl 5' ist bezüglich der Einfallsebene X, Z auf die zweite Polarisatoreinrichtung 3 s-polarisiert und trifft unter dem Brewster-Winkel $\alpha_B$ auf eine an der Rückseite des plattenförmigen Trägerelements 6b gebildete vierte Polarisator-Fläche 11a auf. An der Rückseite des plattenförmigen Trägerelements 6b der zweiten Polarisatoreinrichtung 3 ist ebenfalls eine polarisationsselektive Beschichtung 7b aufgebracht, um die Selektivität bezüglich der s-polarisierten und p-polarisierten Strahlungsanteile zu erhöhen. Wie in Fig. 2b zu erkennen ist, wird der in der zweiten Richtung R2 propagierende Laserstrahl 5' an der vierten Polarisator-Fläche 11a der zweiten Polarisatoreinrichtung 3 reflektiert, so dass dieser nicht mehr auf die erste Polarisatoreinrichtung 2 auftrifft. Der an der vierten Polarisator-Fläche 11a reflektierte Laserstrahl 5' wird in eine (nicht gezeigte) Strahlfalle gelenkt und von dieser absorbiert.

Da der rückreflektierte Laserstrahl 5' gegebenenfalls an der vierten Polarisator-Fläche 11a nicht vollständig reflektiert wird, kann die Rückseite des Trägerelements 6a der ersten Polarisatoreinrichtung 2 als dritte Polarisator-Fläche 8a dienen, um einen ggf. zur ersten Polarisatoreinrichtung 2 gelangenden Strahlungsanteil des rückreflektierten Laserstrahls 5' zu reflektieren bzw. zu einer weiteren Strahlfalle umzulenken, so dass dieser nicht weiter in der zweiten Richtung R2 propagiert. Zur Erhöhung der Polarisationsselektivität ist auch auf der Rückseite des Trägerelements 6a der ersten Polarisatoreinrichtung 2 eine polarisationsselektive Beschichtung 7a aufgebracht.

**Fig. 3** zeigt ein Beispiel für eine Polarisatoranordnung 1, die sich von der in Fig. 1a,b bzw. Fig. 2a,b gezeigten Polarisatoranordnung 1 dadurch unterscheidet, dass an Stelle einer Phasenschiebe-Einrichtung in Form einer Verzögerungsplatte 4 eine Phasenschiebe-Einrichtung 4 verwendet wird, welche zwei phasenschiebende Spiegel 4a, 4b aufweist, die zwischen der ersten Polarisatoreinrichtung 2 und der zweiten Polarisatoreinrichtung 3 angeordnet sind. Die phasenschiebenden Spiegel 4a, 4b bewirken jeweils einen Gangunterschied von A/4 (entsprechend einer Phasenverschiebung von 90°). Der von der ersten Polarisatoreinrichtung 2 transmittierte, linear polarisierte Laserstrahl 5a wird an dem ersten phasenschiebenden Spiegel 4a zirkular polarisiert und an dem zweiten phasenschiebenden Spiegel 4b wieder linear polarisiert, so dass die Polarisationsrichtung des Laserstrahls 5a insgesamt um einen Drehwinkel β von 90° gedreht wird, wie dies bei der in Fig. 1a,b gezeigten Polarisatoranordnung 1 der Fall ist.

Um mit dem ersten bzw. dem zweiten Spiegel 4a, 4b einen Gangunterschied von $\lambda/4$ zu erzeugen, ist es erforderlich, dass die Polarisationsrichtung des Laserstrahls 5a unter einem Winkel von 45° zur Einfallsebene auf den jeweiligen Spiegel 4a, 4b ausgerichtet ist, weshalb die erste Polarisator-Fläche 8 bzw. die zweite Polarisator-Fläche 11 der Polarisatoreinrichtungen 2, 3 jeweils um 45° gegenüber der jeweiligen Oberfläche der phasenschiebenden Spiegel 4a, 4b gedreht sind, die jeweils eine Umlenkung des Laserstrahls 5a um 90° bewirken.

Bei den in Fig. 1a,b und Fig. 2a,b bzw. Fig. 3 gezeigten Polarisatoreinrichtungen 23 sind der erste und zweite (Einfalls-)Winkel auf die erste und zweite Polarisator-Fläche 8, 11 gleich groß und diese entsprechen jeweils dem Brewster-Winkel $\alpha_B$. Die (Einfalls-)Winkel des zurück reflektierten Laserstrahls 5' auf die dritte bzw. vierte Polarisator-Fläche 8a, 11a sind ebenfalls gleich groß und entsprechen dem Brewster-Winkel $\alpha_B$. Dies ist aber nicht zwingend erforderlich, d.h. der erste und zweite Winkel können vom Brewster-Winkel $\alpha_B$ abweichen. Auch ist es günstig, aber nicht zwingend erforderlich, dass die beiden Winkel gleich groß sind. Der Drehwinkel β der Phasenschiebe-Einrichtung 4, 4a, 4b kann ggf. ebenfalls (geringfügig) von 90° abweichen und ggf. zwischen 80° und 100° betragen.

Die Polarisatoranordnung 1 gemäß Fig. 1a,b, Fig. 2a,b bzw. gemäß Fig. 3 kann in unterschiedlichen Anwendungsgebieten eingesetzt werden, in denen ein Hochleistungs-Laserstrahl polarisiert werden muss. **Fig. 5** zeigt stark schematisch eine EUV-Strahlungserzeugungsvorrichtung 20, welche eine solche Polarisatoranordnung 1 aufweist. Die EUV-Strahlungserzeugungsvorrichtung 20 umfasst eine Strahlquelle 21, eine Verstärkeranordnung 22 mit drei optischen Verstärkern bzw. Verstärkerstufen 23a, 23b, 23c, eine nicht näher dargestellte Strahlführungseinrichtung 24 sowie eine Fokussiereinrichtung 25. Die Fokussiereinrichtung 25 dient dazu, den von der Strahlquelle 21 erzeugten und von den Verstärkeranordnung 22 verstärkten Laserstrahl 5 an einem Zielbereich in einer Vakuum-Kammer 28 zu fokussieren, in dem ein Target-Material 26 eingebracht ist. Das Target-Material 26 geht bei der Bestrahlung mit dem Laserstrahl 5b in einen Plasma-Zustand über und emittiert hierbei EUV-Strahlung, die mittels eines Kollektorspiegels 27 fokussiert wird. Bei dem in Fig. 4 gezeigten Beispiel weist der Kollektorspiegel 27 eine Öffnung zum Durchtritt des Laserstrahls 5b auf. Die Strahlquelle 21 weist im gezeigten Beispiel zwei $CO_2$-Laser auf, um einen Vor-Puls und einen Haupt-Puls zu erzeugen, die gemeinsam in der Verstärkeranordnung 22 verstärkt und auf das Target-Material 26 fokussiert werden. Die Strahlquelle 21 bildet gemeinsam mit der Verstärkeranordnung 22 eine Treiberlaseranordnung 29 der EUV-Strahlungserzeugungsvorrichtung 20.

Bei dem in Fig. 5 gezeigten Beispiel ist die Polarisatoranordnung 1 zwischen der Strahlquelle 21 und der Verstärkeranordnung 22 angeordnet und dient dazu, den von der Strahlquelle 21 erzeugten gepulsten Laserstrahl 5, der typischer Weise bereits linear polarisiert ist, in einer ersten Richtung von der Treiberlaseranordnung 29 zum Target-Material 26 möglichst verlustfrei zu transmittieren und den an dem Target-Material 26 zurück reflektierten, in einer zweiten Richtung propagierenden Laserstrahl 5',zu filtern bzw. umzulenken, so dass dieser nicht mehr zur Treiberlaseranordnung 29 bzw. zu optischen Elementen im Strahlweg vor der Polarisatoranordnung 1 gelangen kann.

Um den in der zweiten Richtung propagierenden, erneut auf die Polarisatoranordnung 1 auftreffenden Laserstrahl 5' zu filtern bzw. umzulenken, wird dessen Polarisationsrichtung gegenüber dem in Vorwärtsrichtung aus der Polarisatoranordnung 1 austretenden Laserstrahl 5b um 90° gedreht. Zur Drehung der Polarisationsrichtung des Laserstrahls 5b um 90° ist zwischen der Polarisatoranordnung 1 und dem Target-Material 26 eine weitere Phasenschiebe-Einrichtung 30 angeordnet. Bei der weiteren Phasenschiebe-Einrichtung 30 kann es sich beispielsweise um einen phasenschiebenden Spiegel handeln, der beim Durchlauf des in der ersten Richtung R1 propagierenden Laserstrahls 5b und des zurück reflektierten, in der zweiten Richtung R2 propagierenden Lasersrahls 5' insgesamt einen Gangunterschied von $\lambda/2$ erzeugt und so die gewünschte Drehung der Polarisationsrichtung um 90° bewirkt. Es versteht sich, dass zu diesem Zweck auch andere phasenschiebende oder polarisationsdrehende optische Elemente verwendet werden können, die zwischen der Polarisatoranordnung 1 und dem Target-Material 26 angeordnet sind.

Es versteht sich, dass die Polarisatoranordnung 1 oder ggf. eine weitere Polarisatoranordnung auch an anderer Stelle in der EUV-Strahlungserzeugungsvorrichtung 20 angeordnet werden kann, beispielsweise in der Strahlführungseinrichtung 24, um einen linear polarisierten Laserstrahl zu erzeugen, dessen rotationssymmetrisches Strahlprofil beim Auftreten einer thermischen Linse im Wesentlichen erhalten bleibt, und ggf. um den rückreflektierten Laserstrahl 5' zu filtern.

**Patentansprüche**

1. EUV-Strahlungserzeugungsvorrichtung (20), umfassend:

   eine Treiberlaseranordnung (29) zur Erzeugung eines Laserstrahls (5b),
   eine Vakuum-Kammer (28), in der ein Target-Material (26) anordenbar ist,
   eine Strahlführungseinrichtung (24) zur Führung des Laserstrahls (5b) von der Treiberlasereinrichtung (29) in einer ersten Richtung (R1) auf das Target-Material (26), sowie eine Polarisatoranordnung (1), umfassend:

   eine erste Polarisatoreinrichtung (2) mit einer ersten Polarisator-Fläche (8) zur linearen Polarisation eines in der ersten Richtung (R1) propagierenden Laserstrahls (5), der unter einem ersten, von 0° verschiedenen Winkel ($\alpha_B$) auf die erste Polarisator-Fläche (8) auftrifft,
   **dadurch gekennzeichnet, dass** die Polarisatoranordnung (1) eine Phasenschiebe-Einrichtung (4) zur Drehung einer Polarisationsrichtung (p) des an der ersten Polarisator-Fläche (8) transmittierten, linear polarisierten Laserstrahls (5a) um einen vorgegebenen Drehwinkel ($\beta$), der zwischen 80° und 100° beträgt, sowie eine zweite Polarisatoreinrichtung (3) mit einer zweiten Polarisator-Fläche (11), auf die der linear polarisierte Laserstrahl (5a) nach dem Durchlaufen der Phasenschiebe-Einrichtung (4) unter einem zweiten, von 0° verschiedenen Winkel ($\alpha_B$) auftrifft und von der zweiten Polarisator-Fläche (11) transmittiert wird, umfasst,
   wobei eine Einfallsebene (Y, Z) des auf die zweite Polarisator-Fläche (11) auftreffenden Laserstrahls (5a) gegenüber einer Einfallsebene (X, Z) des auf die erste Polarisator-Fläche (8) auftreffenden Laserstrahls (5) um den vorgegebenen Drehwinkel ($\beta$) gedreht ist.

2. EUV-Strahlungserzeugungsvorrichtung nach Anspruch 1, bei welcher der erste Winkel ($\alpha_B$) und der zweite Winkel ($\alpha_B$) gleich groß sind.

3. EUV-Strahlungserzeugungsvorrichtung nach Anspruch 1 oder 2, bei welcher die erste Polarisatoreinrichtung (2) eine dritte Polarisator-Fläche (8a) und/oder bei welcher die zweite Polarisatoreinrichtung (3) eine vierte Polarisator-Fläche (11a) zur linearen Polarisation eines in einer zweiten, der ersten entgegen gesetzten Richtung (R2) propagierenden Laserstrahls (5') aufweist, wobei der in der zweiten Richtung (R2) propagierende Laserstrahl (5') unter dem ersten Winkel ($\alpha_B$) auf die dritte Polarisator-Fläche (9a) und/oder unter dem zweiten Winkel ($\alpha_B$) auf die vierte Polarisator-Fläche (11a) auftrifft.

4. EUV-Strahlungserzeugungsvorrichtung nach einem der vorhergehenden Ansprüche, bei welcher der erste Winkel ($\alpha_B$), unter dem der Laserstrahl (5, 5') auf die erste und/oder dritte Polarisator-Fläche (8, 8a) auftrifft und/oder der zweite Winkel ($\alpha_B$), unter dem der Laserstrahl (5a, 5') auf die zweite und/oder vierte Polarisator-Fläche (11) auftrifft, dem Brewster-Winkel ($\alpha_B$) entspricht.

5. EUV-Strahlungserzeugungsvorrichtung nach einem der vorhergehenden Ansprüche, bei welcher die erste Polarisator-Fläche (8) an einem Trägerelement aus einem transmittierenden Material, bevorzugt einer planparallelen Platte (6a), gebildet ist und/oder bei der die zweite Polarisator-Fläche (11) an einem Trägerelement aus einem transmittierenden Material, bevorzugt einer planparallelen Platte (6b), gebildet ist.

6. EUV-Strahlungserzeugungsvorrichtung nach Anspruch 5, bei welcher die erste Polarisator-Fläche (8) und die dritte Polarisator-Fläche (8a) an gegenüberliegenden Seiten des Trägerelements (6a) der ersten Polarisatoreinrichtung (2) und/oder bei welcher die zweite Polarisator-Fläche (11) und die vierte Polarisator-Fläche (11a) an gegenüber liegenden Seiten des Trägerelements (6b) der zweiten Polarisatoreinrichtung (3) gebildet sind.

7. EUV-Strahlungserzeugungsvorrichtung nach einem der vorhergehenden Ansprüche, bei welcher das Trägerelement (6a) der ersten Polarisatoreinrichtung (2) an der ersten und/oder dritten Polarisator-Fläche (8, 8a) und/oder das Trägerelement (6b) der zweiten Polarisatoreinrichtung (3) an der zweiten und/oder vierten Polarisator-Fläche (11, 11a) eine polarisationsselektive Beschichtung (7a, 7b) aufweisen.

8. EUV-Strahlungserzeugungsvorrichtung nach einem der vorhergehenden Ansprüche, bei welcher die erste Polarisatoreinrichtung (2) und die zweite Polarisatoreinrichtung (3) baugleich sind.

9. EUV-Strahlungserzeugungsvorrichtung nach einem der vorhergehenden Ansprüche, bei welcher die Phasenschiebe-Einrichtung mindestens ein transmissives phasenschiebendes optisches Element, bevorzugt eine Verzögerungsplatte (4), aufweist.

**10.** EUV-Strahlungserzeugungsvorrichtung nach einem der vorhergehenden Ansprüche, bei welcher die Phasenschiebe-Einrichtung (4) mindestens ein reflektierendes phasenschiebendes optisches Element, bevorzugt einen phasenschiebenden Spiegel (4a, 4b), aufweist.

**11.** EUV-Strahlungserzeugungsvorrichtung nach einem der vorhergehenden Ansprüche, weiter umfassend: mindestens eine weitere Phasenschiebe-Einrichtung (30), die zwischen der Polarisatoranordnung (1) und dem Target-Material (26) angeordnet ist, wobei die weitere Phasenschiebe-Einrichtung (30) zur Erzeugung eines am Target-Material (26) reflektierten, auf die Polarisatoranordnung (1) in einer zweiten, der ersten entgegen gesetzten Richtung (R2) auftreffenden Laserstrahls (5') ausgebildet ist, dessen Polarisationsrichtung (p) senkrecht zur Polarisationsrichtung (s) des in der ersten Richtung (R1) propagierenden Laserstrahls (5b) verläuft.

## Claims

**1.** EUV radiation generating apparatus (20), comprising:

a driver laser arrangement (29) for generating a laser beam (5b),
a vacuum chamber (28), in which a target material (26) can be arranged,
a beam guiding device (24) for guiding the laser beam (5b) from the driver laser device (29) in a first direction (R1) onto the target material (26), and
a polariser arrangement (1), comprising:

a first polariser device (2) having a first polariser surface (8) for linear polarisation of a laser beam (5) propagating in the first direction (R1), which strikes the first polariser surface (8) at a first angle ($\alpha_B$) being different from 0°,
**characterized in that** the polarizer arrangement (1) comprises:

a phase shift device (4) for rotating a polarisation direction (p) of the linearly polarised laser beam (5a) transmitted at the first polariser surface (8) by a predetermined rotation angle ($\beta$) that is between 80° and 100°, and
a second polariser device (3) having a second polariser surface (11), which the linearly polarised laser beam (5a) strikes at a second angle ($\alpha_B$) being different from 0°, after having passed through the phase shift device (4) and is transmitted by the second polariser surface (11), wherein an incidence plane (Y, Z) of the laser beam (5a) striking the second polariser surface (11) is rotated by the predetermined angle ($\beta$) relative to an incidence plane (X, Z) of the laser beam (5) striking the first polariser surface (8).

**2.** EUV radiation generating apparatus according to Claim 1, wherein the first angle ($\alpha_B$) and the second angle ($\alpha_B$) are of equal size.

**3.** EUV radiation generating apparatus according to Claim 1 or 2, wherein the first polariser device (2) comprises a third polariser surface (8a) and/or wherein the second polariser device (3) comprises a fourth polariser surface (11a) for linear polarisation of a laser beam (5') propagating in a second direction (R2) opposite to the first, the laser beam (5') propagating in the second direction (R2) striking the third polariser surface (8a) at the first angle ($\alpha_B$) and/or striking the fourth polariser surface (11a) at the second angle ($\alpha_B$).

**4.** EUV radiation generating apparatus according to one of the preceding claims, wherein the first angle ($\alpha_B$), at which the laser beam (5, 5') strikes the first and/or third polariser surface (8, 8a), and/or the second angle ($\alpha_B$), at which the laser beam (5a, 5') strikes the second and/or fourth polariser surface (11) corresponds to the Brewster angle ($\alpha_B$).

**5.** EUV radiation generating apparatus according to one of the preceding claims, wherein the first polariser surface (8) is formed on a carrier element made of a transmissive material, preferably a plane-parallel plate (6a), and/or wherein the second polariser surface (11) is formed on a carrier element made of a transmissive material, preferably a plane-parallel plate (6b).

**6.** EUV radiation generating apparatus according to Claim 5, wherein the first polariser surface (8) and the third polariser surface (8a) are formed on opposite sides of the carrier element (6a) of the first polariser device (2), and/or wherein the second polariser surface (11) and the fourth polariser surface (11a) are formed on opposite sides of the carrier element (6b) of the second polariser device (3).

**7.** EUV radiation generating apparatus according to one of the preceding claims, wherein the carrier element (6a) of the first polariser device (2) has a polarisation-selective coating (7a) on the first and/or third polariser surface (8, 8a) and/or the carrier element (6b) of the second polariser device (3) has a polarisation-selective coating (7b) on the second and/or fourth polariser surface (11, 11a).

**8.** EUV radiation generating apparatus according to one of the preceding claims, wherein the first polariser device (2) and the second polariser device (3) are of identical design.

**9.** EUV radiation generating apparatus according to one of the preceding claims, wherein the phase shift device comprises at least one transmissive phase-shifting optical element, preferably a retardation plate (4).

**10.** EUV radiation generating apparatus according to one of the preceding claims, wherein the phase shift device (4) comprises at least one reflective phase-shifting optical element, preferably a phase-shifting mirror (4a, 4b).

**11.** EUV radiation generating apparatus according to one of the preceding claims, further comprising:
at least one further phase shift device (30), which is arranged between the polariser arrangement (1) and the target material (26), the further phase shift device (30) being configured to generate a laser beam (5') reflected at the target material (26) and striking the polariser arrangement (1) in a second direction (R2) opposite to the first, the polarisation direction (p) of which laser beam extends perpendicularly to the polarisation direction (s) of the laser beam (5b) propagating in the first direction (R1).


**Revendications**

**1.** Dispositif de génération de rayonnement EUV (20) comprenant :
un système laser d'attaque (29) destiné à générer un faisceau laser (5b), une chambre à vide (28) dans laquelle peut être disposé un matériau cible (26), un moyen de guidage de faisceau (24) destiné à guider le faisceau laser (5b) dans une première direction (R1) depuis le système laser d'attaque (29) vers le matériau cible (26), ainsi qu'un système de polarisation (1), comprenant :

un premier moyen de polarisation (2) pourvu d'une première surface de polarisation (8) destinée à polariser linéairement un faisceau laser (5) qui se propage dans la première direction (R1) et qui est incident sur la première surface de polarisation (8) sous un premier angle ($\alpha_B$) différent de 0°,
**caractérisé en ce que** le système de polarisation (1) comprend un moyen de déphasage (4) destiné à faire tourner une direction de polarisation (p) du faisceau laser polarisé linéairement (5a) et transmis à la première surface de polarisation (8), d'un angle de rotation prédéterminé ($\beta$) qui est compris entre 80° et 100°, ainsi qu'un deuxième moyen de polarisation (3) pourvu d'une deuxième surface de polarisation (11), sur laquelle le faisceau laser polarisé linéairement (5a) est incident sous un deuxième angle ($\alpha_B$) différent de 0° après passage à travers le moyen de déphasage (4) et est transmis par la deuxième surface de polarisation (11), dans lequel un plan d'incidence (Y, Z) du faisceau laser (5a) incident sur la deuxième surface de polarisation (11) est amené à tourner de l'angle de rotation prédéterminé ($\beta$) par rapport à un plan d'incidence (X, Z) du faisceau laser (5) qui est incident sur la première surface de polarisation (8).

**2.** Dispositif de génération de rayonnement EUV selon la revendication 1, dans lequel le premier angle ($\alpha_B$) et le deuxième angle ($\alpha_B$) sont égaux.

**3.** Dispositif de génération de rayonnement EUV selon la revendication 1 ou 2, dans lequel le premier moyen de polarisation (2) comporte une troisième surface de polarisation (8a) et/ou dans lequel le deuxième moyen de polarisation (3) comporte une quatrième surface de polarisation (11a) destinée à polariser linéairement un faisceau laser (5') se propageant dans une deuxième direction (R2) opposée à la première direction, dans lequel le faisceau laser (5') se propageant dans la deuxième direction (R2) est incident sous le premier angle ($\alpha_B$) sur la troisième surface de polarisation (9a) et/ou sous le deuxième angle ($\alpha_B$) sur la quatrième surface de polarisation (11a).

**4.** Dispositif de génération de rayonnement EUV selon l'une des revendications précédentes, dans lequel le premier angle ($\alpha_B$) sous lequel le faisceau laser (5, 5') est incident sur la première et/ou la troisième surface de polarisation (8, 8a) et/ou le deuxième angle ($\alpha_B$) sous lequel le faisceau laser (5a, 5') est incident sur la deuxième et/ou la quatrième surface de polarisation (11) correspond à l'angle de Brewster ($\alpha_B$).

**5.** Dispositif de génération de rayonnement EUV selon l'une des revendications précédentes, dans lequel la première surface de polarisation (8) est formée sur un élément de support à partir d'un matériau transmissif, de préférence une lame plan-parallèle (6a), et/ou dans lequel la deuxième surface de polarisation (11) est formée sur un élément de support à partir d'un matériau transmissif, de préférence une lame plan-parallèle (6b).

**6.** Dispositif de génération de rayonnement EUV selon la revendication 5, dans lequel la première surface de polarisation (8) et la troisième surface de polarisation (8a) sont formées sur des côtés opposés de l'élément de support (6a) du premier moyen de polarisation (2) et/ou dans lequel la deuxième surface de polarisation (11) et la quatrième surface de polarisation (11a) sont formées sur des côtés opposés de l'élément de support (6b) du deuxième moyen de polarisation (3).

7.  Dispositif de génération de rayonnement EUV selon l'une des revendications précédentes, dans lequel l'élément de support (6a) du premier moyen de polarisation (2), sur la première et/ou la troisième surface de polarisation (8, 8a), et/ou l'élément de support (6b) du deuxième moyen de polarisation (3), sur la deuxième et/ou la quatrième surface de polarisation (11, 11a), présentent un revêtement sélectif en polarisation (7a, 7b).

8.  Dispositif de génération de rayonnement EUV selon l'une des revendications précédentes, dans lequel le premier moyen de polarisation (2) et le deuxième moyen de polarisation (3) ont des structures identiques.

9.  Dispositif de génération de rayonnement EUV selon l'une des revendications précédentes, dans lequel le moyen de déphasage comporte au moins un élément optique de déphasage transmissif, de préférence une lame de retardement (4).

10. Dispositif de génération de rayonnement EUV selon l'une des revendications précédentes, dans lequel le moyen de déphasage (4) comporte au moins un élément optique de déphasage réfléchissant, de préférence un miroir de déphasage (4a, 4b).

11. Dispositif de génération de rayonnement EUV selon l'une des revendications précédentes, comprenant en outre : au moins un autre moyen de déphasage (30), qui est disposé entre le dispositif de polarisation (1) et le matériau cible (26), dans lequel l'autre moyen de déphasage (30) est conçu pour générer un faisceau laser (5') qui est réfléchi sur le matériau cible (26) et qui est incident sur le dispositif de polarisation (1) dans une deuxième direction (R2) opposée à la première, et dont la direction de polarisation (p) est perpendiculaire à la direction de polarisation (s) du faisceau laser (5b) se propageant dans la première direction (R1).

EP 3 362 839 B1

Fig. 1a

Fig. 1b

Fig. 2a

Fig. 2b

14

Fig. 3

Fig. 4a

Fig. 4b

Fig. 5

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012092746 A1
- US 20080002751 A1
- DE 102011054941 B3
- JP 61238487 B
- JP 11068213 B
- US 20150062544 A1
- DE 10033071 A1
- EP 1742307 B1
- DE 102007033567 A1